# EUROPEAN PATENT SPECIFICATION

(11) **EP 1 314 695 B1**
(45) Date of publication and mention of the grant of the patent: **22.08.2007**
(21) Application number: 02026526.0
(22) Date of filing: 27.11.2002
(51) Int. Cl.: C01B 33/158

(54) **Silica and method for producing the same**
Kieselsäure sowie Verfahren zu ihrer Herstellung
Silice et procédé pour sa preparation

(30) Priority: 27.11.2001 JP 2001360440
(43) Date of publication of application: 28.05.2003
(73) Proprietor: Mitsubishi Chemical Corporation, Minato-ku Tokyo 108-0014 (JP)
(72) Inventor: Mori, Yutaka, c/o Mitsubishi Chemical Corporation, Kitakyushu, Fukuoka 806-0004 (JP)
(74) Representative: von Füner, Nicolai

(56) References cited:
- EP-A- 0 454 239
- EP-A- 1 167 295
- GB-A- 2 269 377
- US-A- 3 652 215
- US-A- 3 888 972
- US-A- 3 977 993
- US-A- 5 911 658
- KONDO SEIICHI ET AL: "The effect of pH of hydrothermal treatment of hydrogel for the structure of surface and pore of silica gel. A new type of surface silanol groups" CA, XP002179522
- "Prepn. of silica gel with controlled pore volume, etc. - comprises drying silica hydrogel by batch type fluidised drying method" DERWENT, XP002179523

## Description

The present invention relates to novel silica and a producing method thereof, and particularly to novel porous silica having excellent water resistance, sharp pore diameter distribution property and a relatively large pore volume and a producing method thereof.

Silica is a porous material that has been used as a desiccant for a long time. In recent years, silica has also found its utility as a catalyst carrier, a separating agent, an adsorbent and the like, upon which various different features are demanded for silica. Features of silica depend on various properties such as its specific surface area, pore diameter, pore volume, pore diameter distribution, etc. Such properties are greatly affected by conditions under which silica is produced.

"Silica" means both silicic acid anhydride and silicic acid hydrate. Examples of silicic acid anhydride include quartz, tridymite, cristobalite, coesite, stishovite, quartz glass, etc., while examples of silicic acid hydrate include the so-called amorphous "silica gel", which is obtained by gelating silica hydrosol and drying the resultant hydrogel. The latter examples also include colloidal silica, silicate oligomer, and silica of the type which is formed using an organic compound or the like as a template (the so-called micelle template type silica), for example, MCM-41 Exxon Mobil Corporation. "Silica gel" can be made from raw materials such as water glass and alkoxysilane.

As production method of silica being a porous material, there has been widely known a method in which silica hydrogel is subjected to a hydrothermal treatment to control the pore properties thereof, and the like. It has been widely conducted to use, for example, sodium silicate, i.e., the so-called water glass as a raw material of this silica hydrogel. It has also recently been known to use a surfactant or the like as a template to prepare a composite with silica and remove the surfactant or the like from the composite, thereby defining (forming) pores.

Upon production of silica having a mode pore diameter (*Dₘₐₓ*) of 5 nm or greater, particularly 10 nm or greater, and a large pore volume, specifically a pore volume exceeding 1.5 ml/g, there have been generally known (1) a process in which silica hydrogel is subjected to a hydrothermal treatment under conditions of a high temperature or high pH, (2) a process in which a surfactant or the like is used as a template to prepare a composite with silica, and the surfactant or the like is removed from the composite, thereby defining pores, and the like.

However, according to the process (1), any silica having a sufficiently large pore volume and also a large specific surface area has not been provided.

When water glass is used as a raw material of silica hydrogel, the resulting silica comes to incur marked deterioration of hydrothermal resistance due to the influence of impurities such as alkali metals and/or alkaline earth metals derived from the raw material. In other words, the silica involves a problem that the pore structure thereof is simply destroyed by a treatment with steam or hot water, and the use applications thereof, atmospheric temperature upon use, etc. are limited.

On the contrast, according to a technique making use of a silicon alkoxide as a raw material of silica hydrogel, the influence of such impurities can be lessened (for example, Colloids Surfaces, 63, 33 (1992)). However, it has been not attempted to enlarge the pore volume of the resulting silica.

As another kind of production method of high-purity porous silica, there has been known a method in which an organic or inorganic template is used. This method is excellent in the ability to control pore distribution and can provide such porous silica (micellar template silica) having a *Dₘₐₓ* of 5 nm or greater as described above. Examples of such a method include a method in which a surfactant or the like is used as a template to prepare a composite with silica, and the surfactant or the like is removed from the composite, thereby defining pores (for example, Chem. Mater. 12, 686-696 (2000), or Langmuir, 16(2), 356 (2000)).

According to this production method, it has been known to provide a porous material whose pore volume is large though its pore diameter distribution is sharp, by using the surfactant in combination with an organic solvent. However, this method has involved problems that the water resistance of the resulting silica is insufficient, and the productivity is poor due to complicated preparation steps.

As described above, it has been desired to develop a porous material, particularly, porous silica whose pore volume is relatively large, whose pore diameter distribution is controlled narrowly, and which is high in purity and excellent in hydrothermal resistance, and a production method thereof. However, there have not been yet provided satisfactory porous silica and a production method thereof.

With the foregoing problems in view, it is an object of the present invention to provide a new kind of porous silica having a pore volume larger than 1.6 ml/g, a *Dₘₐₓ* value as relatively great as at least 5 nm, controlled pore properties and also excellent hydrothermal resistance.

The present inventor has carried out an extensive investigation to address the foregoing problems and, as a result, has found that when porous silica is produced through the hydrothermal treatment (without aging)of silica hydrogel, which is preferably obtained from a silicon alkoxide (alkoxysilane), silica having a large pore volume and controlled pore properties can be obtained by adding a specific treatment after the hydrothermal treatment. More specifically, the inventor has found that novel silica having such excellent properties as described above is industrially provided with good productivity by subjecting silica hydrogel to a hydrothermal treatment and then preferably bringing the resultant silica into contact with a hydrophilic organic solvent to control pore properties, thus having accomplished the present invention.

According to a first aspect of the present invention, there is provided a silica having the following properties:
(a) a pore volume of the silica is larger than 1.6 ml/g and is 3.0 ml/g or less;
(b) a specific surface area of the silica is between 100 and 1000 m²/g;
(c) a mode pore diameter (*Dₘₐₓ*) of the silica is 5 nm or more;
(d) a value of *Q⁴*/*Q³* in a solid-state Si nuclear magnetic resonance (hereinafter called solid-state Si NMR) spectrum of the silica is 1.2 or more;
(e) the silica is amorphous;
(f) a total content of metal impurities in the silica is 100 ppm or less;
wherein a percentage of a total volume of pores whose diameters are within the range of Dₘₐₓ ± 20% to a total volume of all pores is 50% or more.

According to a second aspect of the present invention, there is provided a method for producing silica, comprising the steps of:
hydrothermal treating a silica hydrogel without aging to thereby obtain a slurry;
regulating a water content in the liquid ingredient of the slurry to 5 % or less by weight; and
drying the resultant slurry to thereby obtain silica.

The novel silica according to the present invention is excellent in heat resistance and water resistance compared with the conventional silica and is thus high in stability and has high purity. Also, the method according to the present invention makes it possible to produce silica controlled within desired physical property ranges by a relatively simple process preferably using a silicon alkoxide as a raw material.

The present invention will hereinafter be described in detail.

### (1) Characteristics of Silica According to Present Invention

"Silica"according to the present invention means silicic acid hydrate expressed by the rational formula SiO₂□nH₂O. Among all various kinds of silica, the present invention is highly effective when applied especially to "silica gel", micelle-templated silica, and the like.

One of characteristics of the silica according to the present invention is that a value of its pore volume, which is measured by adsorption / desorption method of a nitrogen gas, is within a larger range than that of the conventional silica. Specifically, the value of its pore volume is larger than 1.6 ml/g, preferably 1.8 ml/g or more, further preferably 1.85 ml/g or more and 3 ml/g or less, preferably 2.5 ml/g or less, further preferably 2.4 ml/g or less. The pore volume value can be calculated using adsorption of a nitrogen gas under relative pressure of 0.98 according to the adsorption isothermal line.

Besides, the value of specific surface area is 100 m²/g or more, preferably 200 m²/g or more, further preferably 300 m²/g or more, still further preferably 350 m²/g or more and 1000 m²/g or less, preferably 900 m²/g or less, further preferably 800 m²/g or less, still further preferably 700 m²/g or less. The specific surface area value can be measured by BET method based on adsorption and desorption of a nitrogen gas.

Further, the silica according to the present invention has another charasteristic that the value of its mode pore diameter (*Dₘₐₓ*) is 5 nm or more. The mode pore diameter (*Dₘₐₓ*) is obtained from a desorption isotherm measured by adsorption and desorption of a nitrogen gas, by plotting a pore diameter distribution curve calculated according to BJH method, which is described in E. P. Barrett, L. G. Joyner, P. H. Haklenda, J. Amer. Chem. Soc., vol. 73, 373 (1951). The pore diameter distribution curve means a differential pore volume, namely, a differential nitrogen-gas adsorption amount (Δ*V*/Δ(log*d*)) to pore diameter *d* (nm), where *V* is an adsorption volume of a nitrogen gas. It has no particular upper limit, although being usually 50 nm or less and preferably 30 nm or less.

Further, in the silica according to the present invention, a percentage of a total volume of pores whose diameters are within the range of (*Dₘₐₓ*) ± 20 % to a total volume of all pores is 50 % or more, preferably 60 % or more, further preferably 70 % or more. This fact means that the silica according to the present invention has pores whose diameters are highly uniform about the mode pore diameter (*Dₘₐₓ*), namely, that the silica has very narrow (sharp) distribution of pore diameter. The ratio has no particular upper limit, although it is usually 90 % or less.

In connection with the above-described characteristic, it is preferable that the silica according to the present invention has a differential pore volume Δ*V*/Δ(log*d*) measured by the above BJH method at the mode pore diameter (*Dₘₐₓ*) within a range of usually 2 ml/g or more, preferably 3 ml/g or more, further preferably 5 ml/g or more, and usually 40 ml/g or less, preferably 30 ml/g or less, further preferably 25 ml/g or less (in the afore-mentioned formula, *d* is a pore diameter (nm), and *V* is an adsorption volume of a nitrogen gas). It is understood that the silica whose differential pore volume Δ*V*/Δ(log*d*) is within the above range has a very large absolute quantity of pores whose diameters are highly uniform about the mode pore diameter (*Dₘₐₓ*).

Preferably, in addition to the above-described characteristics relating to its porous structure, the silica according to the present invention is amorphous in its three-dimensional structure, namely, it has no crystalline-like structure. To put it in another way, X-ray diffraction analysis of the silica according to the present invention shows substantially no crystalline peak. Throughout the present specification, silica that is not amorphous means the silica that shows at least one peak attributable to crystalline structure at over 6 angstrom (Å Units d-spacing) in an X-ray diffraction pattern. The amorphous silica is especially excellent in productivity compared with the crystalline silica.

The silica according to the present invention also has a structural characteristic, which is identifyed by solid-state Si nuclear magnetic resonance (hereinafter called solid-state Si NMR) measurement: a *Q⁴* / *Q³* value in solid-state Si NMR spectrum is 1.2 or more and preferably 1.4 or more. The *Q⁴* / *Q³* value means a molar ratio of Si bonded to three (-OSi)s (*Q³*) to Si bonded to four (-OSi)s (*Q⁴*) in a repeating unit of the silica. The value has no particular upper limit, although being usually 10 or less. It is generally known that the silica has higher thermal stability as the *Q⁴* / *Q³* value is larger. The silica according to the present invention is therefore expected to be highly excellent in thermal stability. On the contrast, some examples of the conventional crystalline micelle-templated silica have a *Q⁴* / *Q³* value smaller than 1.2, indicating its low thermal stability, especially hydrothermal stability.

It is possible to calculate the *Q⁴* / *Q³* value based on the results of solid-state Si NMR measurement using the method described latter, in EXAMPLES section. Analysis of measured data (determination of peak positions) is performed by deconvolution of a spectrum and extracting each peak using, for example, a Gaussian function.

The silica according to the present invention is highly pure with extremely low total content of metal elements (metal impurities) except for silicon that constitutes the basic structure of silica. Specifically, a total content of such metal impurities is 100 ppm or less, preferably 50 ppm or less, further preferably 10 ppm or less, still further preferably 5 ppm or less, most preferably 1 ppm or less. Such a little effect of impurities has become a major contributing factor for the silica according to the present invention in exhibiting excellent properties such as high thermal resistance, high hydrothermal resistance, and the like.

Another characteristic of the silica according to the present invention is that it undergoes little changes in pore properties even when it is subjected to a heat treatment in water (hydrothermal resistance test). The changes in pore properties of the silica after the hydrothermal resistance test are observed as changes in physical properties as to porosity, for example, specific surface area, pore volume, pore diameter distribution and the like. For example, when the silica according to the present invention is subjected to a hydrothermal resistance test at 200 °C for 6 hours, the specific surface area after the test is preferably 20 % or more (that is, remaining ratio of specific surface area is 20 % or more) of the specific surface area before the test. The silica of the present invention having such properties is preferred as, for example, a catalyst support or the like because the properties of porosity are hardly lost even under severe conditions of use for a long period of time. This remaining ratio of specific surface area is further preferably 35 % or more, still further preferably 50 % or more.

The silica according to the present invention also has characteristics that are not observed in the conventional silica: even after the hydrothermal resistance test, the property of sharp distribution of pore diameter is extremely hard to deteriorate, and the pore volume undergoes extremely little change or, if any, increases.

The hydrothermal resistance test in the present invention means a treatment in which silica is brought into contact with water of a specified temperature (200 °C) for a fixed period of time (6 hours) in a closed system. The whole interior of the closed system may be filled with water, or the closed system may partially have a vapor phase portion under pressure therein, and steam may be present in the vapor phase portion so far as the whole silica according to the present invention is present in water. In this case, the pressure of the vapor phase portion may be, for example, at least 60,000 hPa, preferably at least 63,000 hPa. An error of the specified temperature is preferably settled within ±5 °C, especially ±3 °C, further especially ±1 °C.

The above-described silica according to the present invention can be obtained through the method described in the following.

### (2) Method for Producing Silica According to Present Invention

The method for producing silica according to the present invention is characterized in that: silica hydrogel is hydrothermal treated without aging to thereby obtain a slurry; the water content in the liquid ingredient of the slurry is regulated to 5 % by weight or lower; and the resultant slurry is then dried to thereby obtain silica.

More preferably, the method according to the present invention features that silica hydrogel is obtained by hydrolyzing a silicon alkoxide and then subjected to a hydrothermal treatment, without substantially aging the silica hydrogel, and the resultant slurry is contacted with a hydrophilic organic solvent and then dried, thereby removing water in the product.

The silica hydrogel may be prepared in accordance with any process, and examples of the silica hydrogel include silica hydrogel obtained by hydrolyzing a silicic acid alkali salt and silica hydrogel obtained by hydrolyzing a silicon alkoxide. Among these, the silica hydrogel obtained by hydrolyzing the silicon alkoxide is preferred because its raw material, silicon alkoxide, can be provided as a high-purity product so that inmixture of impurities into the silica hydrogel can be easily avoided.

For example of silicon alkoxide used as raw material of the silica according to the present invention, tri or tetraalkoxysilane with a lower alkyl group whose carbon number are between 1 and 4, such as trimethoxysilane, tetramethoxysilane, triethoxysilane, tetraethoxysilane, tetrapropoxysilane, tetrabutoxysilane, and their oligomers are mentioned. Above all, tetramethoxysilane, tetraethoxysilane and their oligomers, especially tetramethoxysilane and its oligomers, are preferably used because it becomes possible to obtain silica with highly controlled pore properties. One of the reasons is that the above-mentioned examples of silicon alkoxide can be easily purified by distillation and turned into a highly purified product, therefore being suitable for raw material of silica in high purity. A total content of metal elements belonging to alkali metal group or alkaline-earth metal group (metal impurities) in silicon alkoxide is 100 ppm or less, preferably 50 ppm or less, further preferably 10 ppm or less, still further preferably 1 ppm or less. Content of these metal impurities is measurable using a method same as that used for a content of impurities in general silica.

In the present invention, as the hydrolyzing and condensing step, silicon alkoxide is hydrolyzed in the absence of any catalyst while silica hydrosol obtained is condensed to thereby form silica hydrogel.

Hydrolysis of silicon alkoxide is carried out using water of, per 1 mol of silicon alkoxide, usually 2 times by mol or more, preferably 3 times by mol or more, further preferably 4 times by mol or more and usually 20 times by mol or less, preferably 10 times by mol or less, further preferably 8 times by mol or less. Hydrolysis of silicon alkoxide generates silica hydrogel and alcohols, and the generated silica hydrosol is successively condensed to form silica hydrogel.

Hydrolysis is carried out at a temperature of usually room temperature or more, and usually 100 °C or less. The hydrolysis reaction can be carried out at higher temperature by maintaining liquid phase under high pressure. Reaction time of hydrolysis is difficult to prescribe indiscriminately because the time required for completion of gelation varies according to composition of the reaction solution (a kind of silicon alkoxide or a molar ratio to water) and hydrolysis temperature. In order to obtain silica with excellent pore properties according to the present invention, it is preferable to determine the reaction time appropriately such that the value of the fracture stress of the silica hydrogel does not exceed 6 MPa.

It is possible to accelerate hydrolysis by adding acids, alkalis, salts, etc. to the system of hydrolysis reaction as catalysts. Use of such additives, however, brings about aging of the hydrogel formed as described later, and is therefore not so preferable in producing the silica according to the present invention.

In the hydrolysis of silicon alkoxide described above, it is important to carry out stirring sufficiently. For example, if a stirrer with stirring blades attached around a rotation axis is used, the stirring speed (the number of rotations of the rotation axis) depends on the size of reactor, the size of stirring blades, the shape of stirring blades, the number of stirring blades, contact area to the reaction solution, although it is usually 30 rpm or more, preferably 50 rpm or more.

If, however, the stirring speed is too fast, there is the possibility that droplets originate from inside a vessel block off various gass lines or adhere to an inner wall of the reactor vessel to thereby worsen heat conduction and have a bad influence on temperature management, which is important in controlling physical properties. Further, the extraneous matters adhered to the inner wall may come off and get mixed into products to thereby make worse the quality. On such grounds, it is preferred that the stirring speed is usually 2000 rpm or less, particularly 1000 rpm or less.

As a method for stirring two separating liquid phases (water phase and silicon alkoxide phase) in the present invention, any stirring method is applicable as much as it can accelerate the reaction. Above all, as preferable apparatus that can fully mix these two liquid phases, the following (i) and (ii) are mentioned.
(i) a stirrer having the stirring blades whose rotation axis is inserted vertically or slightly obliquely into the liquid surface so as to generate up-and-down flow in the reactor.
(ii) a stirrer having the stirring blades whose rotation axis is in the direction substantially parallel to the surface of the mixture so as to generate agitation across the two liquid phases.

Preferably, when a stirrer as above-described (i) or (ii) is used, the rotational speed of the stirring blades is such a speed that a circumferential speed of the stirring blades (a speed of the edges of stirring blades) is between 0.05 and 10 m/s, particularly 0.1 and 5 m/s, further particularly 0.1 and 3 m/s.

The shape or the length of the stirring blade can be selected appropriately without restraint. For example of the stirring blade, a propeller blade, a plain blade, a inclined blade, a pitch plain blade, a plain disc turbine blade, a curved blade, a phaudler-type blade, an anchor blade, and a ribbon blade are mentioned.

The width of the blades, the number of the blades, the angle of inclination of the blades, etc. can be selected appropriately according to the shape and size of a vessel of a reactor and a stirring power to be used. For example of a preferable stirrer, a ratio (*b*/*D*) of the width of the blade (the width of the blade along the direction of the rotation axis) to the internal diameter of a vessel of a reactor (the maximum section of the surface of liquid phase which defines a vertical plane with respect to the direction of the rotation axis) is between 0.05 and 0.2, angle of inclination (θ) is within a range of 90 ° ± 10 °, the number of the blades is between 3 and 10.

Especially, an apparatus having a structure such that the rotation axis is disposed over the surface of a liquid in a reactor vissel, and that the stirring blades is attached to the tip of a shaft extended from the rotation axis, is preferably used from the points of view of stirring efficiency and maintenance of the apparatus.

In the hydrolysis reaction of silicon alkoxide, the silicon alkoxide is hydrolyzed to form silica hydrosol at first, then the silica hydrosol successively undergos condensation reaction while viscosity of the reaction solution increases, and at last the reaction solution is gelated to form silica hydrogel.

Next, in the present invention, as a property-controlling step, the silica hydrogel generated from the hydrolysis is successively subjected to a hydrothermal treatment subsequently to the hydrolyzing/condensing step without substantially aging so that the silica hydrogel does not increase its hardness. By hydrolyzing silicon alkoxide, soft silica hydrogel is generated. As described in the introductory section on pages 1 to 5, the conventional method first subjects this hydrogel to aging or drying so as to stabilize its properties, and thereafter carries out hydrothermal treatment. Using such a method, it is difficult to produce the silica according to the present invention.

The above-described fact that silica hydrogel generated from the hydrolysis is successively subjected to hydrothermal treatment without substantially aging means that the silica hydrogel is subjected to the subsequent hydrothermal treatment while maintaining a soft state as it has immediately after the generation of silica hydrogel.

Specifically, it is preferable to carry out hydrothermal treatment of silica hydrogel usually within 10 hours, perticularly within 8 hours, more perticularly within 6 hours, still more particularly within 4 hours, from a point of time the silica hydrogel generates.

In industrial plant, for example, there is a case where a large quantity of silica hydrogel is generated and stored in a silo or the like for a while, and then hydrothermal treatment is carried out on the silica hydrogel. In such a case, a passing time from the silica hydrogel generates until it is subjected to hydrothermal treatment may exceed the above-defined range. In order to prevent substantial aging of silica hydrogel, it is sufficient to, for example, keep liquid components in the silica hydrogel from drying during the storage of silica hydrogel in a silo.

Specifically, it is preferred to shut up the silo or adjust the humidity in the silo. Also preferred is to immerse the silica hydrogel in water or other solvent during the still storage.

During the storage of silica hydrogel, it is also preferred to keep temperature low, for example, usually 50 °C or less, particularly 35 °C or less, further particularly 30 °C or less. Another technique for preventing substantial aging of silica hydrogel is to prepare silica hydrogel with controlling composition of ingredients in advance so that the concentration of silica in silica hydrogel becomes relatively low.

The advantageous effect caused by the immediate hydrothermal treatment of silica hydrogel without substantial aging, and the reason for the effect, are considered as following.

If silica hydrogel is aged, a macrostructural network structure composed of -Si-O-Si- bonds is formed throughout the whole silica hydrogel. It is presumed that the network structure spreading throughout the whole silica hydrogel becomes an obstacle to formation of pores during hydrothermal treatment. On the contrast, if silica hydrogel is prepared with controlled composition of ingredients in advance so that the concentration of silica in silica hydrogel becomes relatively low, it is presumed that the formation of cross-linking is inhibited during the storage of silica hydrogel and thus silica hydrogel is kept from aging.

It is therefore important in the present invention to subject silica hydrogel to the immediate hydrothermal treatment without substantial aging.

It is undesirable to add acids, alkalis, salts, etc. to the system of hydrolysis reaction of silicon alkoxide, or to set the temperature for the hydrolysis reaction excessively severe, partly because such treatments would accelerate aging of hydrogel. Additionaly, in various aftertreatments subsequent to the hydrolysis such as water-washing, drying, and still standing, it is also undesirable to expose silica hydrogel unnecessarily to high temperature or long time.

The silica hydrogel obtained by the hydrolysis of the silicon alkoxide is preferably subjected to a grinding treatment or the like so as to give an average particle diameter of 10 mm or less, often 5mm or less, preferably 1 mm or less, further preferably 0.5 mm or less before the hydrothermal treatment is conducted.

In the production method of the silica according to the present invention, it is important to immediately subject the silica hydrogel to a hydrothermal treatment just after the formation thereof. In the production method according to the present invention, however, it is only necessary that the silica hydrogel subjected to the hydrothermal treatment be not aged. It is therefore not always necessary to immediately subject the silica hydrogel to the hydrothermal treatment just after the formation thereof, and, for example, the silica hydrogel may be subjected to the hydrothermal treatment after left at rest at a low temperature for a while.

If the silica hydrogel is not subjected to a immediate hydrothermal treatment just after the formation as described above, it is preferred to concretely check aging state of hydrogel prior to the hydrothermal treatment. Aging state of hydrogel may be concretely checked using any possible method, examples of which include a method using hardness of hydrogel measured by a process described later in "Embodiment" section is mentioned. Specifically, as described above, by carrying out hydrothermal treatment using the soft hydrogel whose fracture stress is usually 6 MPa or less, it is possible to obtain silica whose properties meet the conditions defined in the present invention. The fracture stress of the soft hydrogel is preferably 3 MPa or less, more preferably 2 MPa or less.

Various conditions for the hydrothermal treatment will be described in the following: water may be either liquid or gas, although it is preferable to use liquid water so as to mix with silica hydrogel into the form of slurry for the hydrothermal treatment. Upon the hydrothermal treatment, a subject silica hydrogel is made into the form of slurry by adding water in quantity of usually 0.1 time by weight or more, preferably 0.5 time by weight or more, further preferably 1 time by weight or more, and usually 10 times by weight or less, preferably 5 times by weight or less, further preferably 3 times by weight or less with respect to silica hydrogel. Then the slurry is subjected to a hydrothermal treatment at a temperature of usually 40 °C or more, preferably 100 °C or more, further preferably 150 °C or more, still further preferably 170 °C or more, and usually 250 °C or less, preferably 200 °C or less, for a duration time of usually 0.1 hour or more, preferably 1 hour or more, and usually 100 hours or less, preferably 10 hours or less. If the temperature of the hydrothermal treatment is too low, it is difficult to realize sharp pore distribution as well as large pore volume.

Water used in the hydrothermal treatment may contain a solvent. Specific examples of the solvent include methanol, ethanol and propanol that are lower alcohols. When silica hydrogel obtained by hydrolyzing, for example, an alkoxysilane is subjected to the hydrothermal treatment, the solvent may be an alcohol derived from the alkoxysilane that is a raw material of the silica hydrogel.

The content of the solvent in water used in the hydrothermal treatment may be optional, but it is better to less contain the solvent. For example, when such silica hydrogel obtained by hydrolyzing the alkoxysilane as described above is subjected to the hydrothermal treatment, the silica hydrogel is washed with water, and the washed silica hydrogel is used in the hydrothermal treatment, whereby silica having excellent pore properties and a large pore volume can be prepared even when the hydrothermal treatment is conducted at a temperature lowered to about 150 °C. Alternatively, even when the hydrothermal treatment is conducted with water containing the solvent, the silica according to the present invention can be easily obtained by conducting the hydrothermal treatment at a temperature of about 200 °C.

The method of hydrothermal treatment is also applicable to materials where, for the purpose of produce membrane reactor or the like, silica is formed as films or layers on particles, a basal plate, or base substance such as a tube. It is possible that a reactor vessel used for the hydrolysis reaction is successively used for the hydrothermal treatment with changing temperature. However, since the optimum condition for the hydrolysis reaction is generally different from that for the hydrothermal treatment, it is usually difficult to obtain the silica according to the present invention according to the method using the same reactor vessel without additional water successively.

Among the conditions for hydrothermal treatment descrived above, the diameter and pore volume of the resultant silica tends to become larger as temperature becomes higher. Preferably, temperature for hydrothermal treatment is usually between 100 and 300 °C, preferably between 100 and 250 °C, more preferably between 100 and 200 °C. Besides, as time passes in hydrothermal treatment, the specific surface area of the resultant silica tends to once reach a maximum and then decrease slowly. The conditions for hydrothermal treatment should be determined based on the above-described tendency in accordance with desired properties, although it is generally preferable to set higher temperature for hydrothermal treatment than that for the hydrolysis reaction since hydrothermal treatment is carried out for the purpose of modifying properties of silica.

In order to prepare silica according to the present invention, which is excellent in microstructural homogeneity, the hydrothermal treatment is preferably conducted under fast heating rate conditions in such a manner that the temperature within the reaction system reaches the intended temperature within 5 hours. More specifically, it is preferable to adopt a value within a range of 0.1 to 100 °C/min, often 0.1 to 30 °C/min, particularly 0.2 to 10 °C/min as an average heating rate from the beginning of heating to arrival at the target temperature when the silica hydrogel is charged into a vessel to treat it.

A heating method making good use of a heat exchanger or a heating method in which hot water prepared in advance is charged is also preferred because a heating speed can be shortened. When the heating rate falls within the above range, the heating may be conducted stepwise. When it takes the temperature within the reaction system a long time to reach the intended temperature, there is a possibility that the aging of the silica hydrogel may be caused to progress during the heating to deteriorate the microstructural homogeneity.

The heating time required to reach the above-intended temperature is preferably within 4 hours, more preferably within 3 hours. The water used in the hydrothermal treatment may also be preheated for the purpose of shortening the heating time.

If temperature or duration time for hydrothermal treatment is outside the above-described range, it is difficult to obtain silica according to the present invention. For example, if the temperature for hydrothermal treatment is too high, the pore diameter and pore volume of silica becomes too large and the pore distribution of silica becomes too broad. On the contrast, if the temperature for hydrothermal treatment is too low, the resultant silica includes little cross-linkages and is hence low in thermal stability, causing lack of peak in pore distribution or extremely small *Q⁴* / *Q³* value in the solid-state Si NMR.

Hydrothermal treatment in ammonia water brings about the same effect at lower temperature compared with hydrothermal treatment in pure water. Besides, the resultant silica obtained by hydrothermal treatment in ammonia water generally exhibits higher hydrophobicity compared with that obtained by hydrothermal treatment using ammonia-free water. Extremely high hydrophobicity is obtained by carrying out the hydrothermal treatment at relatively high temperature of 30 °C or more, preferably 40 °C or more, and 250 °C or less, preferably 200 °C or less. The concentration of ammonia in ammonia water is preferably 0.001 % or more, further preferably 0.005 % or more, and preferably 10 % or less, further preferably 5 % or less.

The silica obtained through the hydrothermal treatment described above contains a great amount of water. For example, the silica after the hydrothermal treatment is provided as silica (for example, silica slurry) containing a great amount of water. In the production method of the silica according to the present invention, it is important to remove the water. More preferably, a process, in which the silica slurry is brought into contact with a hydrophilic organic solvent to replace the water with the hydrophilic organic solvent, and the resultant silica slurry is then dried, is most important.

In the present invention, the water contained in the silica is preferably replaced with the hydrophilic organic solvent, and the silica is then dried, whereby shrinkage of the silica in the drying step can be prevented, and the pore volume of the silica can be kept large to provide silica having excellent pore properties and a large pore volume. The reason for it is not clearly known, but is considered to be attributable to such a phenomenon described below.

A liquid component in the silica slurry after the hydrothermal treatment is composed mainly of water. Since molecules of the water strongly interact with the surface of the silica, it is considered to require a great quantity of energy for completely removing the water from the silica.

When the drying process (for example, drying under heat) is performed under conditions that a great amount of water is present, water applied with thermal energy reacts with an unreacted silanol group to change the structure of the silica. The most marked change of this structural change is condensation of silica skeletons, and it is considered that the silica is locally made high density by the condensation. Since the silica skeletons have a three-dimensional structure, the local condensation (high densification of silica skeletons) of the skeletons affects the pore properties of the overall silica particles formed by the silica skeletons. As a result, it is considered that the particles shrink to shrink the pore volume and pore diameter thereof.

Therefore, for example, the liquid component (containing a great amount of water) in the silica slurry is replaced with the hydrophilic organic solvent, whereby water in the silica slurry can be removed to prevent such shrinkage of the silica as described above.

Any organic solvent may be used as the hydrophilic organic solvent used in the present invention so far as it can dissolve water in plenty on the basis of the above-described consideration. Among others, those undergoing great intramolecular polarization are preferred. Those having a dielectric constant of at least 15 are more preferred.

In the production method of the silica according to the present invention, it is necessary to remove the hydrophilic organic solvent in the drying step after removing the water by the hydrophilic organic solvent for the purpose of providing high-purity silica. Accordingly, the hydrophilic organic solvent is preferably a solvent having a low boiling point, which can be easily removed by drying (for example, drying under heat, drying under reduced pressure, or the like). The boiling point of the hydrophilic organic solvent is preferably at most 150°C, often at most 120°C, particularly at most 100°C.

Specific examples of the hydrophilic organic solvent include alcohols such as methanol, ethanol, propanol and butanol; ketones such as acetone, methyl ethyl ketone and diethyl ketone; nitriles such as acetonitrile; amides such as formamide and dimethylformamide; aldehydes; and ethers. Among these, alcohols and ketones are preferred, with lower alcohols such as methanol, ethanol and propanol being particularly preferred. In the present invention, these exemplified hydrophilic organic solvents may be used either singly or in any combination and any mixing proportions thereof.

The hydrophilic organic solvent used may contain water so far as the water can be removed. It is naturally preferred that the content of water in the hydrophilic organic solvent be lower, and it is preferable that the water content is generally at most 20 %, often at most 15 %, more preferably at most 10 %, particularly at most 5 %.

In the present invention, the replacing treatment with the hydrophilic organic solvent may be performed at any temperature under any pressure. It is preferred that the treatment temperature be generally at least 0 °C, often at least 10 °C, but generally at most 100 °C, often at most 60 °C. The treatment pressure may be any of ordinary pressure, pressurization and reduced pressure.

The amount of the hydrophilic organic solvent brought into contact with the silica slurry may be any amount. However, if the amount of the hydrophilic organic solvent used is too little, the progression speed of the replacement becomes insufficient. If the amount is too great on the other hand, the effect of the hydrophilic organic solvent corresponding to the increase of the amount used is saturated though the replacement efficiency is enhanced, and it is economically not preferable to use the hydrophilic organic solvent in such a great amount. Thus, the amount of the hydrophilic organic solvent used is generally 0.5 to 10 times by volume as much as the bulk volume of the silica. This replacing process with the hydrophilic organic solvent may be preferably performed repeatedly several times because the replacement of water is more surely made.

The contact of the hydrophilic organic solvent with the silica slurry may be conducted by any method. Examples thereof include a method in which the hydrophilic organic solvent is added while stirring the silica slurry in a stirring vessel, a method in which the silica separated from the silica slurry by filtration is charged into a packed column, and the hydrophilic organic solvent is passed through the packed column, and a method in which the silica slurry is placed and immersed in the hydrophilic organic solvent to leave it at rest.

Completion of the replacing process with the hydrophilic organic solvent may be determined by measuring a water content of the liquid ingredient in the silica slurry. For example, the silica slurry is sampled periodically to measure the water content, and a point that the water content is reduced to 5% or lower, preferably 4% or lower, more preferably 3% or lower may be regarded as an end point. The measurement of the water content may be performed by any method. For example, the Karl Fischer's method may be mentioned.

After the replacing process with the hydrophilic organic solvent, the silica is separated from the hydrophilic organic solvent and dried, whereby the silica according to the present invention can be prepared. As a separating method at this time, any conventionally known solid-liquid separation method may be used. More specifically, for example, decantation, centrifugation, filtration or the like may be selected according to the size of silica particles to conduct solid-liquid separation. These separation methods may be used either singly or in any combination thereof.

The resultant silica is dried at temperature of usually 40 °C or more, preferably 60 °C or more, and usually 200 °C or less, preferably 120 °C or less. A drying method is not particularly limited: it may be either batch processing or continuous processing, or may be executed either under normal pressure or under reduced pressure. Above all, vacuum drying is preferred not only for the reason that it enables quick drying of silica, but also for the reason that it increases the pore volume and specific surface area of the obtained silica.

If the resultant silica contains carbon content originating from silicon alkoxide being raw material, it is preferable to calcine at temperature of usually 400 and 600 °C to eliminate the carbon content. It is also preferable to calcine at maximum temperature of 900 °C in order to control condition of the silica surface. Finally, after crushed and classified if necessary, the silica according to the present invention is obtained as the final product.

The novel silica according to the present invention is excellent in heat resistance and water resistance compared with the conventional silica and is thus high in stability and has high purity. According to the production method of the silica of the present invention, silica controlled within desired physical property ranges can be prepared by preferably using a silicon alkoxide as a raw material by a relatively simple process.

The silica according to the present invention can be used in various application fields applied by the conventional silica. In particular, when the silica is used as a catalyst support, membrane reactor or the like, it can be more stably used for a long period of time without very deteriorating the performance thereof.

The silica according to the present invention can be utilized in any applications in addition to the conventional applications of silica. Among these, the conventional applications include the following uses.

For example in an application field used in production and treatment of products in industrial equipments, may be mentioned applications to various kinds of catalysts and catalyst carriers (acid and base catalysts, photocatalysts, noble metal catalysts, etc.), waste water or slop oil treatment agents, deodorizers, gas separators, industrial desiccants, bioreactors, bioseparators, membrane reactors, and the like. In an application field of building materials, may be mentioned applications to moisture conditioning agents sound insulating or absorbing materials refractory heat insulating materials, and the like. In an application field of air conditioning may be mentioned applications to moisture conditioning agents for desiccant air-conditioners, thermal accumulators for heat pumps, and the like. In an application field of paint and ink, may be mentioned applications to delustering agents, viscosity adjusters, chromaticity adjusters, precipitation preventing agents, antifoaming agents, ink strike-through preventing agents, stamping wheels, wall paper, and the like. In an application field of additives for resins, may be mentioned applications to anti-blocking agents for films (polyolefin, polyester, etc.), plate-out preventing agents, reinforcing agents for silicone resins, reinforcing agents for rubber (for tires, general rubber, flowability etc.), improvers, anti-caking agents for powdery resins, ink suitability modifiers, delustering agents for artificial leathers and coating films, fillers for additives and adhesive tapes, light transmission property adjusters, glare protection adjusters, fillers for porous polymer sheets, and the like. In an application field of paper making, may be mentioned applications to fillers (foreign matter attachment preventing agents, etc.) for heat sensitive paper, fillers (ink absorbents, etc.) for improving images on ink-jet paper, fillers (photosensitive density improvers, etc.) for diazo sensitized paper, writability improvers for tracing paper, fillers (writability, ink absorptivity and anti-blocking property improvers, etc.) for coated paper, fillers for electrostatic recording, and the like. In an application field of food, may be mentioned applications to filter aids for beer, for sedimentation agent, for fermentation products such as soy, rice wine and wine stabilizers (scavengers of turbidity factor proteins and yeast, etc.) for various fermentation drinks, food additives, anti-caking agents for powdery food, and the like. In an application field of medical and agricultural chemicals, may be mentioned applications to tabletting aids for chemicals, grinding aids, carriers (dispersibility, gradual releasability and delivery property improvers, etc.) for drugs, carriers (carriers for oily agricultural chemicals, hydration dispersibility, gradual releasability and delivery property improvers, etc.) for agricultural chemicals, additives (anti-caking agents, powdering ability improvers, etc) for drugs, additives (anti-caking agents, precipitation preventing agents, etc.) for agricultural chemicals, and the like. In an application field of separation-materials, may be mentioned applications to fillers for chromatography, separating agents, fullerene separating agents, adsorbents (for proteins, coloring matter, odor, etc.), dehumidifiers, and the like. In an application field of agriculture, may be mentioned applications to additives for feeds and additives for fertilizers. As other applications, may be mentioned moisture conditioning agents, desiccants, cosmetic additives, antibacterial agents, deodorants, deodorizers, fragrants, additives (powdering ability improvers, anti-caking agents, etc.) for detergents, abrasives (for dentifrice, etc.), (powdering ability improvers, anti-caking agents, etc.) for powder fire extinguishers, antifoaming agents, buttery separators, and the like in a life related application field.

In particular, the silica according to the present invention has great pore volume and specific surface area compared with the conventional silica having the same pore diameter, and so it has high adsorption and absorption capacities and its pores can be controlled precisely. Accordingly, it can be suitably used in fields of which particularly excellent heat resistance and water resistance are required, and moreover controlled pore properties, and the fact that physical properties scarcely change over a long period of time are required among the above-mentioned applications.

### EXAMPLES

The present invention will hereinafter be described in more detail by the following Examples. However, the present invention is not limited to the following Examples unless the gist thereof is overstepped.

### (1) Analytic Method of Silica:

### 1-1) Measurement of Total Pore Volume, Specific Surface Area and Differential Pore Volume:

A BET nitrogen absorption isotherm was measured by means of AS-1 manufactured by Quanthachrome Co. to obtain a total pore volume and a specific surface area. Specifically, a measured value at a relative pressure *P*/*P₀* = 0.98 was adopted for the pore volume, and the specific surface area was calculated out from the amount of nitrogen absorbed at relative pressures *P*/*P₀* = 0.1, 0.2, and 0.3 using BET multipoint method. Further, a pore distribution curve and a differential pore volume in a mode diameter (*Dₘₐₓ*) were obtained by BJH method. The interval between the relative pressures of the respective measurement points was determined to be 0.025.

### 1-2) Powder X-ray Diffractometry Measurement:

Measurement was performed using an RAD-RB apparatus manufactured by Rigaku Industrial Co. and CuKα as a radiation source. A divergent slit, a scattering slit and a receiving slit were determined to be 1/2 deg, 1/2 deg and 0.15 mm, respectively.

### 1-3) Measurement of the Content of Metallic Impurities:

After hydrofluoric acid was added to a silica sample (2.5 g), the mixture was heated and dried to solid. And then water was added to make the total volume 50 ml. This aqueous solution was used to conduct ICP emission spectrometry. Sodium and potassium were analyzed by a flame spectrochemical analysis.

### 1-4) Solid-State Si NMR Measurement:

Measurement was performed using a solid state NMR apparatus ("MSL300") manufactured by Bruker Co., a resonance frequency of 59.2 MHz (7.05 tesla), under conditions of CP/MAS (Cross Polarization/Magic Angle Spinning) probe using a sample tube with a diameter of 7 mm. Spining rate of samples was set at 5,000 rps.

The analysis (determination of *Q⁴* peak position) of the measured data is performed by deconvolution of a spectrum and extracting each peak. Specifically, curve fitting analysis using a Gaussian function is performed. Curve fitting software "GRAMS 386" produced by Thermogalatic Co. can be used in this analysis.

Using areas of *Q⁴* and *Q³* peaks thus-determined by the peak division technique, the ratio of areas these peaks (*Q⁴* / *Q³*) was calculated.

### 1-5) Hydrothermal Stability Test:

Purified water was added to a silica sample to prepare a 40 wt% slurry. About 40 ml of the slurry prepared above was placed in a stainless steel-made microbomb having a volume of 60 ml, and the bomb was sealed and immersed in an oil bath of 200 ± 1 °C for 6 hours. A part of the slurry was taken out of the microbomb and filtered through filter paper (No. 5A). After the filtration, the residual cake was dried under reduced pressure at 1000 °C for 5 hours, the specific surface area of the residual sample was measured.

### (2) Preparation and Evaluation of Silica: Embodiment 1:

### < hydrolysis and gelation reaction >

A 5-L glass separable flask (jacketed) equipped with a water-cooling condenser opened to the air at the upper part thereof was charged with purified water (1,000 g). While stirring at such a stirring speed that the speed of the edges of stirring blades was 2.5 m/s, tetramethoxysilane (1,400 g) was charged over 3 minutes into the flask. An amount of water by mol per 1 mol of tetramethoxysilane used (a molar ratio of water to tetramethoxysilane) was 6. Hot water of 50 °C was passed through the jacket of the separable flask. The stirring was successively continued and stopped at the time the temperature of the contents reached mixture's boiling point. Hot water of 50 °C was successively passed through the jacket for about more 0.5 hours to gelate the sol formed.

### < Grinding reaction >

Silica hydrogel obtained by a publicly known method was passed through a nylon screen having a prescribed mesh opening to grind the hydrogel, thereby obtaining powdery silica hydrogel having a prescribed average particle diameter.

### < Step of washing silica hydrogel with water >

This silica hydrogel (450 g) and water (675 g) were charged into a beaker, stirred for 10 minutes and then subjected to solid-liquid separation. This process was repeated 3 times in total.

### <Hydrothermal treatment step>

This silica hydrogel and water (500 g) were charged into a 1-L glass-made autoclave and subjected to a hydrothermal treatment in a closed system for 3 hours at its corresponding temperature shown in Table 1.

### < Contact treatment with hydrophilic organic solvent >

Silica obtained by the hydrothermal treatment was filtered through No. 5A filter paper. The resultant filter cake was added together with absolute methanol (600 g) to a separate separable flask and slowly stirred at room temperature for 1 hour by means of a stirring blade. The resultant slurry was subjected to solid-liquid separation by decantation. With respect to the resultant solids, the replacing process was performed again with absolute methanol (600 g) in the same manner as described above.

This process was performed 3 times in total including the first time. As a result, the content of water in the resultant silica was at most 2% by weight as determined by the Karl Fischer's method.

The silica obtained in the above-described manner was dried under reduced pressure at 100°C to a constant weight to obtain silica according to Embodiment 1.

### Embodiments 2-12:

Preparation of silica was performed under the same conditions as in Embodiment 1 except that the molar ratio of water/tetramethoxysilane, the average particle diameter of silica hydrogel, whether the step of washing silica hydrogel with water was conducted or not, the hydrothermal treatment temperature and the kind of the hydrophilic organic solvent were respectively changed as shown in Table 1 to obtain silica according to Embodiments 2 to 12 (only in Embodiment 2, the drying after the replacing step with the hydrophilic organic solvent was performed under vacuum).

With respect to the silica obtained in Embodiments 1 to 12, various physical properties as measured in accordance with the above-described analytic methods are shown in Tables 1-1 and 1-2. No peak attributable to crystallinity appears on the powder X-ray diffraction patterns of all the silica, and a peak attributable to periodic structure on the low-angle side (2θ ≦ 5 deg) is also not observed. With respect to the contents of metal impurities in the silica according to Embodiment 1, the detected results are shown in Table 2. The contents of all the metal impurities were lower than the lower limit of detection. The contents of metal impurities in the silica according to Embodiments 2 to 12 were all equivalent to the values of the silica according to Example 1. Therefore, the description was omitted. With respect to the silica according to Embodiments 2, 4, 8 and 10, the hydrothermal resistance test was performed to measure their specific surface areas, pore volumes, etc. after the test. The results are shown in Tables 1-1 and 1-2.

### Comparative Example 1:

In accordance with the production method of silica described in Chem. Mater., 12, 686-696 (2000), MCF-3 was prepared by setting an aging temperature described in the literature to 100°C to obtain silica according to Comparative Example 1.

### Comparative Example 2:

CARIACT G-10 (product of Fuji Silysia Chemical Co., Ltd.) was used as silica according to Comparative Example 2.

### Comparative Example 3:

Nipgel CY-200 (product of Nippon Silica Industrial Co., Ltd.) was used as silica according to Comparative Example 3.

### Comparative Example 4:

Carplex BS-306 (product of Shionogi & Co., Ltd.) was used as silica according to Comparative Example 4.

With respect to the silica obtained in Comparative Examples 1 to 4, various physical properties as measured in accordance with the above-described analytic methods are shown in Table 1-3. Also, with respect to the contents of metal impurities in the silica according to Comparative Example 1, the detected results are shown in Table 2.

**Table 1-1**

| | Em.1 | Em.2 | Em.3 | Em.4 | Em.5 | Em.6 |
|---|---|---|---|---|---|---|
| Molar ratio of water to silicon-alkoxide | 6 | 6 | 6 | 6 | 4 | 10 |
| Mean particle diameter [mm] of silica-hydrogel | 0.3 | 0.3 | 5 | 0.3 | 0.3 | 0.3 |
| Washing state of silica hydrogel | Not washed: | Not washed: | Not washed: | Washed | Washed | Washed |
| Temperature [°C] of hydrothermal treatment | 150 | 150 | 150 | 150 | 150 | 150 |
| Hydrophilic organic solvent | Methanol | Methanol | Methanol | Methanol | Methanol | Methanol |
| Presence/absence of crystalline peak | Absence | Absence | Absence | Absence | Absence | Absence |
| Mode diameter (Dₘₐₓ) [nm] | 12.5 | 13 | 15 | 13.8 | 13.5 | 15 |
| Differential pore volume [ml/g] at Dₘₐₓ | 14 | 23 | 18 | 16 | 13 | 10 |
| Specific surface area [m²/g] | | 669 | | 510 | | |
| (Same [m²/g] after a hydrothermal resistance test) | 589 | (250) | 685 | (265) | 519 | 538 |
| (Residual percentage) | | (37%) | | (52%) | | |
| Pore volume [ml/g] | | 2.34 | | 2.01 | | 2.01 |
| (Same [ml/g] after a hydrothermal resistance test) | 2.01 | (1.74) | 2.34 | (1.97) | 1.75 | 2.02 |
| (Residual percentage) | | (74%) | | (98%) | | |
| Volume ratio [%] of pores within a range of Dₘₐₓ±20% to the entire pores | | 85 | | 86 | | |
| (Same [%] after a hydrothermal resistance test) | 80 | (68) | 88 | (75) | 73 | 85 |
| (Residual percentage) | | (80%) | | (87%) | | |

**Table 1-2**

| | Em. 7 | Em. 8 | Em. 9 | Em. 10 | Em. 11 | Em. 12 |
|---|---|---|---|---|---|---|
| Molar ratio of water to silicon-alkoxide | 20 | 6 | 6 | 6 | 10 | 20 |
| Mean particle diameter [mm] of silica-hydrogel | 0.3 | 0.3 | 0.3 | 0.3 | 0.3 | 0.3 |
| Washing state of silica hydrogel | Not washed | Not washed | Not washed | Washed | Washed | Washed |
| Temperature [°C] of hydrothermal treatment | 150 | 200 | 200 | 200 | 200 | 200 |
| Hydrophilic organic solvent | Methanol | Methanol | Acetone | Methanol | Methanol | Methanol |
| Presence/absence of crystalline peak | Absence | Absence | Absence | Absence | Absence | Absence |
| Mode diameter (Dₘₐₓ) [nm] | 14 | 17.9 | 19 | 22.7 | 24.3 | 25 |
| Differential pore volume [mUg] at Dₘₐₓ | 9 | 11 | 12 | 11 | 17 | 10 |
| Specific surface area [m²/g] | | 383 | | 268 | | |
| (Same [m²/g] after a hydrothermal resistance test) | 516 | (243) | 379 | (249) | 269 | 253 |
| (Residual percentage) | | (63%) | | (93%) | | |
| Pore volume [ml/g] | | 1.87 | | 1.85 | | |
| (Same [mUg] after a hydrothermal resistance test) | 1.8 | (1.94) | 1.95 | (1.78) | 2.28 | 1.82 |
| (Residual percentage) | | (104%) | | (96%) | | |
| Volume ratio [%] of pores within a range of Dₘₐₓ±20% to the entire pores | | 76 | | 72 | | |
| (Same [%] after a hydrothermal resistance test) | 67 | (72) | 80 | (76) | 88 | 71 |
| (Residual percentage) | | (95%) | | (106%) | | |

**Table 1-3**

| | Com. Ex. 1 | Com. Ex. 2 | Com. Ex. 3 | Com. Ex. 4 |
|---|---|---|---|---|
| Molar ratio of water to silicon-alkoxide | - | - | - | - |
| Mean particle diameter [mm] of silica-hydrogel | - | - | - | - |
| Washing state of silica hydrogel | - | - | - | - |
| Temperature [°C] of hydrothermal treatment | - | - | - | - |
| Hydrophilic organic solvent | - | - | - | - |
| Presence/absence of crystalline peak | Presence | Absence | Absence | Absence |
| Mode diameter (Dₘₐₓ) [nm] | 10.9 | 10.5 | 5.2 | 13.5 |
| Differential pore volume [ml/g] at Dₘₐₓ | 18 | 4 | 2.5 | 5.5 |
| Specific surface area [m²/g] | 736 | 413 | 789 | 332 |
| (Same [m²/g] after a hydrothermal resistance test) | (235) | (64) | (28) | (77) |
| (Residual percentage) | (32%) | (15%) | (4%) | (23%) |
| Pore volume [ml/g] | 2.45 | 1.12 | 0.99 | 1.24 |
| (Same [ml/g] after a hydrothermal resistance test) | (2.09) | (1.05) | (0.89) | (1.05) |
| (Residual percentage) | (84.3%) | (94%) | (90%) | (85%) |
| Volume ratio [%] of pores within a range of Dₘₐₓ±20% to the entire pores | 78 | 47 | 44 | 45 |
| (Same [%] after a hydrothermal resistance test) | (38) | (36) | (24) | (38) |
| (Residual percentage) | (49%) | (77%) | (55%) | (84%) |

**Table 2**

| Element | Em. 1 | Com. Ex. 1 |
|---|---|---|
| Al | <0.5 | 1 |
| Ca | <0.5 | <0.5 |
| Cr | <0.5 | <0.5 |
| Cu | <0.5 | <0.5 |
| Fe | <0.5 | 1.5 |
| K | <0.5 | 1.3 |
| Li | <0.5 | <0.5 |
| Mg | <0.5 | <0.5 |
| Mn | <0.5 | <0.5 |
| Na | <0.5 | 12.5 |
| Ni | <0.5 | <0.5 |
| Ti | <0.5 | <0.5 |
| Zn | <0.5 | <0.5 |
| Zr | <0.5 | 2.4 |

As apparent from Tables 1-1 to 1-3, the porous silica according to the present invention is excellent in hydrothermal stability and has a high retention of specific surface area (i.e., reduction of the specific surface area is little) even under a variety of severe conditions of use, and so it can keep its stable performance over a long period of time.

The reason for it is considered to be as follows. The powder X-ray diffraction pattern revealed that for example, the silica of Comparative Example 1 has a peak attributable to crystallinity as shown in Tables 1-1 to 1-3. This indicates that the silica has a structure that molecules thereof are highly and regularly arranged.

On the other hand, it is considered that the silica according to the present invention undergoes little structural change against external environments such as a hydrothermal stability test because it is amorphous, and is hence stable.

According to the production method of the silica of the present invention, there can be imparted extremely superb nature that the pore volume of the resultant silica is scarcely reduced or somewhat increased even after the hydrothermal resistance test (Embodiments 4, 8 and 10). This is considered to be attributable to the fact that reconstruction of nano structure arrangement of the porous silica is caused without being accompanied by total volume change under such severe conditions as in the hydrothermal resistance test, and consequently the density of the silica nano structures becomes high to increase space (pore volume) in the porous silica.

## Claims

1. A silica having the following properties:
(a) a pore volume of the silica is larger than 1.6 ml/g and is 3.0 ml/g or less;
(b) a specific surface area of the silica is between 100 and 1000 m²/g;
(c) a mode pore diameter (*Dₘₐₓ*) of the silica is 5 nm or more;
(d) a value of *Q⁴*/*Q³* in a solid-state Si nuclear magnetic resonance (hereinafter called solid-state Si NMR) spectrum of the silica is 1.2 or more;
(e) the silica is amorphous; and
(f) a total content of metal impurities in the silica is 100 ppm or less;
wherein a percentage of a total volume of pores whose diameters are within the range of Dₘₐₓ ± 20% to a total volume of all pores is 50% or more.

2. A silica according to claim 1, wherein said pore volume is between 1.8 and 3 ml/g.

3. A silica according to claim 1, wherein said specific surface area is between 200 and 900 m²/g.

4. A silica according to claim 1, wherein said mode pore diameter (*Dₘₐₓ*) is 50 nm or less.

5. A silica according to claim 1, wherein said total content of metal impurities is 50 ppm or less.

6. A silica according to claim 5, wherein said total content of metal impurities is 10 ppm or less.

7. A silica according to claim 1, wherein a differential pore volume at said mode pore diameter (*Dₘₐₓ*) is between 2 and 40 ml/g.

8. A method for producing the silica according to claim 1, comprising the steps of:
hydrothermal treating a silica hydrogel without aging to thereby obtain a slurry;
regulating a water content in the liquid ingredient of the slurry to 5 % or less by weight; and
drying the resultant slurry to thereby obtain silica.

9. A method according to claim 8, wherein:
said method further comprises the step of hydrolyzing a silicon alkoxide to thereby obtain the silica hydrogel prior to said step of hydrothermally treating; and
in said step of regulating, the slurry is contacted with a hydrophilic organic solvent so as to regulate the water content.

10. A method according to claim 9, wherein an amount of water used for said step of hydrolyzing is between 3 and 20 times by mole as much as the silicon alkoxide.

11. A method according to claim 9, wherein after the slurry is contacted with a hydrophilic organic solvent in said step of regulating, said step of drying of the resultant slurry is carried out at 100 °C or lower.

## Patentansprüche

1. Kieselsäure mit folgenden Eigenschaften:
(a) das Porenvolumen der Kieselsäure liegt über 1,67 ml/g und beträgt 3,0 ml/g oder weniger;
(b) die spezifische Oberfläche der Kieselsäure liegt zwischen 100 und 1000 m²/g;
(c) der häufigste Porendurchmesser (Dₘₐₓ} der Kieselsäure beträgt 5 nm oder mehr;
(d) der Q⁴/Q³-Wert im Kernmagnetresonanzspektrum des Si im festen Zustand-(nachfolgend als "fester Zustand-Si-NMR" bezeichnet)-Spektrum der Kieselsäure beträgt 1,2 oder mehr;
(e) die Kieselsäure ist amorph und
(f) der Gesamtgehalt an Metallverunreinigungen in der Kieselsäure beträgt 100 ppm oder weniger,
wobei der Prozentanteil des Gesamtvolumens an Poren, deren Durchmesser in einem Bereich von Dₘₐₓ ± 20 % bis zu einem Gesamtvolumen sämtlicher Poren liegt, 50 % oder mehr beträgt.

2. Kieselsäure nach Anspruch 1, bei der das Porenvolumen zwischen 1,8 und 3 ml/g liegt.

3. Kieselsäure nach Anspruch 1, bei der die spezifische Oberfläche zwischen 200 und 900 m²/g liegt.

4. Kieselsäure nach Anspruch 1, bei der der häufigste Porendurchmesser (Dₘₐₓ) 50 nm oder weniger beträgt.

5. Kieselsäure nach Anspruch 1, bei der der Gesamtgehalt an Metallverunreinigungen 50 ppm oder weniger beträgt.

6. Kieselsäure nach Anspruch 5, bei der der Gesamtgehalt an Metallverunreinigungen 10 ppm oder weniger beträgt.

7. Kieselsäure nach Anspruch 1, bei der das Differentialporenvolumen beim häufigsten Porendurchmesser (Dₘₐₓ) zwischen 2 und 40 ml/g liegt.

8. Verfahren zur Herstellung der Kieselsäure nach Anspruch 1, das folgende Stufen umfasst:
Hydrothermale Behandlung eines Kieselsäurehydrogels ohne Alterung zur Erzielung einer Aufschlämmung,
Einstellung eines Wassergehalts in der Flüssigkomponente der Aufschlämmung auf 5 Gew.-% oder darunter und
Trocknung der erhaltenen Aufschlämmung zur Gewinnung der Kieselsäure.

9. Verfahren nach Anspruch 8, bei dem:
das Verfahren außerdem noch die Stufe der Hydrolyse eines Siliciumalkoxids zur Gewinnung des Kieselsäurehydrogels vor der Stufe der hydrothermalen Behandlung umfasst und
auf der Stufe der Einstellung, die Aufschlämmung mit einem hydrophilen organischen Lösungsmittel in Berührung gebracht wird, um auf diese Weise den Wassergehalt einzustellen.

10. Verfahren nach Anspurch 9, bei dem die für die Stufe der Hydrolyse verwendete Wassermenge die 3- bis 20-fache molare Menge des Siliciumalkoxids beträgt.

11. Verfahren nach Anspruch 9, bei dem nach der Kontaktierung der Aufschlämmung mit einem hydrophilen organischen Lösungsmittel auf der Stufe der Einstellung die Stufe der Trocknung der erhaltenen Aufschlämmung bei 100°C oder darunter durchgeführt wird.

## Revendications

1. Silice ayant les propriétés suivantes :
(a) un volume de pore de la silice est supérieur à 1,6 ml/g et est de 3,0 ml/g ou moins;
(b) une surface spécifique de la silice est située entre 100 et 1 000 m²/g ;
(c) un diamètre de pore dominant *(Dₘₐₓ)* de la silice est de 5 nm ou plus;
(d) une valeur de *Q⁴*/*Q³* dans un spectre de résonance magnétique nucléaire Si à l'état solide (ci-après appelé RMN Si état solide) de la silice est de 1,2 ou plus;
(e) la silice est amorphe ; et
(f) une teneur totale des impuretés métalliques dans la silice est de 100 ppm ou moins ;
dans laquelle un pourcentage d'un volume total des pores dont les diamètres se situent à l'intérieur de la plage de Dₘₐₓ ± 20 % par rapport à un volume total de tous les pores est de 50 % ou plus.

2. Silice selon la revendication 1, dans laquelle ledit volume de pore est situé entre 1,8 et 3 ml/g.

3. Silice selon la revendication 1, dans laquelle ladite surface spécifique est située entre 200 et 900 m²/g.

4. Silice selon la revendication 1, dans laquelle ledit diamètre de pore dominant (*Dₘₐₓ*) est de 50 nm ou moins.

5. Silice selon la revendication 1, dans laquelle ladite teneur totale des impuretés métalliques est de 50 ppm ou moins.

6. Silice selon la revendication 5, dans laquelle ladite teneur totale des impuretés métalliques est de 10 ppm ou moins.

7. Silice selon la revendication 1, dans laquelle un volume différentiel de pore au dit diamètre dominant de pore *(Dₘₐₓ)* est situé entre 2 et 40 ml/g.

8. Procédé de production de la silice selon la revendication 1, comprenant les étapes de :
traitement hydrothermique d'un hydrogel de silice sans maturation pour obtenir de là une suspension ;
régulation d'une teneur en eau dans l'ingrédient liquide de la suspension à 5 % ou moins en poids ; et
séchage de la suspension résultante pour de là obtenir la silice.

9. Procédé selon la revendication 8, dans lequel :
ledit procédé comprend en outre l'étape d'hydrolyse d'un alcoxyde de silicium pour de là obtenir l'hydrogel de silice avant ladite étape de traitement de manière hydrothermique ; et
dans ladite étape de régulation, la suspension est mise en contact avec un solvant organique hydrophile afin de réguler la teneur en eau.

10. Procédé selon la revendication 9, dans lequel une quantité d'eau utilisée pour ladite étape d'hydrolyse est située entre 3 et 20 fois en moles autant que d'alcoxyde de silicium.

11. Procédé selon la revendication 9, dans lequel après que la suspension soit mise en contact avec un solvant organique hydrophile dans ladite étape de régulation, ladite étape de séchage de la suspension résultante est conduite à 100°C ou moins.
